# EUROPÄISCHE PATENTANMELDUNG

(11) **EP 1 106 146 A1**
(43) Veröffentlichungstag der Anmeldung: **13.06.2001**
(21) Anmeldenummer: 99811105.8
(22) Anmeldetag: 02.12.1999
(51) Int. Cl.: A61C 13/00

(54) **Werkzeugmaschine zur Herstellung von Grundgerüsten für Zahnersatz**

(71) Anmelder: Eidgenössische Technische Hochschule Zürich, 8092 Zürich (CH)
(72) Erfinder: Filser, Frank, 8102 Oberengstringen (CH); Gauckler, Ludwig, Prof.Dr., 8200 Schaffhausen (CH); Kocher, Peter, 8304 Wallisellen (CH); Luethy, Heinz, Prof. Dr., 2000 Neuchâtel (CH); Shaerer, Peter, Prof. Dr., 8053 Zürich (CH)
(74) Vertreter: Patentanwälte Breiter + Wiedmer AG

(57) **Zusammenfassung**

Eine automatische Werkzeugmaschine (10) dient zur Herstellung von Grundgerüsten (68) für Zahnersatz, insbesondere für Zahnkronen und/oder Zahnbrücken, von genauer dreidimensionaler Gestalt. Diese Grundgerüste (68) sind auf präparierten natürlichen und/oder künstlichen Zahnstümpfen befestigbar. Die Werkzeugmaschine (10) umfasst einen Maschinenrahmen (12, 14) oder ein -gehäuse, einen Werkstückträger mit einer Rotationswelle (38), wenigstens eine Digitalisierungseinheit (46), wenigstens eine Bearbeitungseinheit (52) und eine elektronische Rechen- und Steuereinheit (50) für alle Antriebsorgane. Es ist ein Träger für das Werkstück, einen Rohling (42), und/oder für die Bearbeitungseinheitlen (52) ausgebildet, welcher als Bewegungseinheit mit drei Translationsachsen in x-, y- und z-Richtung dient. Die Digitalisierung des Präparationsmodells (44) und die Bearbeitung des Rohlings (41) werden zeitlich entkoppelt auf derselben Werkzeugmaschine (10) durchgeführt. Vor der Bearbeitung des Rohlings (42) aus den ermittelten und gespeicherten Digitalisierungsdaten und einem vorgegebenen, materialspezifischen Skalierungsfaktor werden die Bearbeitungswege für den Rohling (42) berechnet.

## Beschreibung

Die Erfindung bezieht sich auf eine automatische Werkzeugmaschine zur Herstellung von Grundgerüsten für Zahnersatz, insbesondere für Zahnkronen und/oder Zahnbrücken, von genauer dreidimensionaler Gestalt, welche Grundgerüste auf präparierten natürlichen und/oder künstlichen Zahnstümpfen befestigbar sind, wobei die Werkzeugmaschine einen Maschinenrahmen oder ein -gehäuse, einen Werkstückträger mit einer Rotationswelle, wenigstens eine Digitalisierungseinheit, wenigstens eine Bearbeitungseinheit und eine elektronische Rechen- und Steuereinheit für alle Antriebsorgane umfasst. Weiter betrifft die Erfindung ein Verfahren zur Herstellung von positiven Grundgerüsten für Zahnersatz mit der automatischen Werkzeugmaschine.

Es sind eine Anzahl von Vorrichtungen und Verfahren zur Herstellung von künstlichen Zahnbrücken und Zahnkronen bekannt, welche gesamthaft als Zahnersatz bezeichnet werden. Grundsätzlich wird nach der zahnärztlichen Präparation ein Abdruck des Zahnstumpfes, der Zahnumgebung und des Kie-fers angefertigt. Weiter ist ein System mit einer Mundkamera bekannt, welches die Bearbeitungsdaten aus den im Mund aufgenommenen Bildern ableitet, ohne den Weg über den Abdruck zu gehen.

Aus dem Abdruck kann über eine Gipsabformung ein sogenanntes Meistermodell hergestellt werden. Dieses Meistermodell zeigt die Situation im Mund des Patienten aus Gips. Der Zahntechniker modelliert auf diesem Meistermodell mit handwerklichem Geschick ein Modell des Grundgerüstes des Zahnersatzes in Wachs sowie bei niedriger Temperatur schmelzendem oder polymerisierend aushärtendem Kunststoff. Dieses Modell kann in feuerfesten Massen eingebettet, ausgeheizt und dann aus metallischen Werkstoffen gegossen werden. Das Wachsmodell, diese Bezeichnung wird auch beim Einsatz von Kunststoff verwendet, kann aber auch über mechanische Kopierbearbeitung im Massstab 1:1, vergrössert oder verkleinert, auf einen anderen Werkstoff übertragen werden. Vorliegenden interessiert nur die "Kopierbearbeitung", auch mit Vergrös-serung oder Verkleinerung. Ein aus keramischem Material bestehendes Grundgerüst für Zahnkronen und/oder -brücken wird dichtgesintert und schrumpft dabei auf die endgültige Gestalt, und zwar derart, dass das Grundgerüst später präzis auf die Zahnstümpfe aufgesetzt werden kann. Durch Aufbringen einer Beschichtung aus Porzellan (Feldspaltkeramik) oder aus Kunststoff auf die äussere Oberfläche des Grundgerüstes kann bei Bedarf die Zahnkrone oder die Zahnbrücke individualisiert werden.

Die WO,A1 96/05782 beschreibt eine manuell bedienbare, analog arbeitende Vorrichtung zur Herstellung von Zahnfüllungen und ähnlichem. Die Vorrichtung beinhaltet zwei Spindeln zum Rotieren eines Modells und eines Rohlings. Die Rotation von Modell und Rohling muss synchron erfolgen. Senkrecht zur Rotationsachse von Modell und Rohling sind beim Modell ein Fühler und beim Rohling ein Bearbeitungswerkzeug angebracht. Rotieren Modell und Rohling, wird der Fühler manuell mit der Modelloberfläche in Kontakt gebracht. Gleichzeitig bearbeitet das Bearbeitungswerkzeug den Rohling entsprechend. Wird der Fühler über die gesamte Modelloberfläche bewegt, entsteht eine massstäbliche Kopie des Modells. Die hauptsächlichen Nachteile dieser Ausführungsform sind die nicht einstellbare Skalierung, d.h. fehlende Vergrösserungs- oder Ver-kleinerungsmöglichkeit, die manuelle Bedienung, die notwendige exakte Abstimmung von Fühler und Werkzeug, und die Probleme bei der Herstellung von Körpern mit Kavitäten (konkave Oberflächenform). Die in der WO,A1 96/05782 beschriebene Vorrichtung ist deshalb nicht geeignet zur automatisierten Herstellung von Zahnkronen und Zahnbrücken jeglicher Geometrie.

In der US,A 5184306 wird eine automatische Hochpräzisionsfertigung von Objekten mit komplexer und individueller Geometrie. Diese komplizierten Objekte können beispielsweise auch Zahnkronen oder Zahnbrücken sein, deren Digi-taldatenwerten beispielsweise einer Bibliothek entnommene Idealgeometrien überlagert werden. Dann werden diese Idealgeometrien den Digitaldaten an-gepasst und verändert. Davon werden dann die Wege für die Bearbeitungsmaschine abgeleitet. Eine Vorrichtung ist auch nicht ansatzweise dargestellt.

Aus der EP,A2 0904742 und anderen Publikationen sind Vorrichtungen bekannt, welche aus zwei voneinander getrennten Geräten bestehen, wovon jedes eine Rechenanlage integriert hat. Das eine Gerät dient dem Digitalisieren der Oberflächen eines Meistermodells, das andere Gerät dem Bearbeiten der Zahnkrone und/oder der Zahnbrücke aus einem Rohling. In derartigen Vorrichtungen existieren zahlreiche Schnittstellen. Die Investitionskosten für derartige Vorrichtungen sind regelmässig hoch.

Das Digitalisieren der Oberflächen eines Meistermodells liefert annäherungs-weise die kavitale Oberfläche des Grundgerüstes. Zementierungsspalte und okklusale Oberfläche des Grundgerüstes müssen beim Rechnen, z.B. via flächen- oder volumenrückgeführter, aufwendiger dreidimensionaler Modelle ergänzt werden. Die Arbeitsweise und Arbeitsmittel entsprechen somit nicht der traditionellen kunstvollen Arbeitsweise eines Zahntechnikers, benötigen jedoch dennoch speziell geschultes Fachpersonal.

Andere Vorrichtungen arbeiten über CAD/CAM. Sie müssen, ausgehend von den digitalisierten Daten, eine Flächenrückführung oder eine Rückführung der digitalisierten Oberflächen in CAD-Systeme durchführen. Die Nachbearbeitung der Daten, z.B. das Einfügen von standardisierten Zwischengliedern aus einer Bibliothek über CAD, ist dann möglich. Die Arbeit mit solchen System erfordert spezielle Kenntnisse und Fertigkeiten und ist durch die Verwendung von standardisierten Zwischengliedern hinsichtlich der Individualität für die Patienten-situation eingeschränkt.

Der vorliegenden Erfindung liegt die Aufgabe zugrunde, eine automatische Werkzeugmaschine der eingangs genannten Art und ein Verfahren zur Herstellung von positiven Grundgerüsten für Zahnersatz zu schaffen, welche eine sichere Herstellung mit einer kleinen und einfach zu bedienenden Vorrichtung erlauben. Vorrichtung und Verfahren sollen insbesondere für ein Grundgerüst aus einem porösen Keramikgrünling, nach dem Sintern hochfester Keramik, aber auch für Grundgerüste aus Kunststoff oder einem anderen, einfach zu bearbeitenden Werkstoff, geeignet sein.

In bezug auf die Werkzeugmaschine wird die Aufgabe erfindungsgemäss dadurch gelöst, dass ein Träger für das Werkstück, einen Rohling, und/oder für die Bearbeitungseinheiten als Bewegungseinheit mit drei Translationsachsen in x-, y- und z-Richtung ausgebildet ist. Spezielle und weiterbildende Ausführungsformen der Werkzeugmaschine sind Gegenstand von abhängigen Ansprüchen.

Da die konkaven Innenflächen von Zahnkronen und/oder Zahnbrücken ohne Hinterschneidungen ausgebildet sein sollen, genügt es, dass vorzugsweise der Werkstückträger in x-, y- und z-Richtung, also den Richtungen eines rechtwinkligen räumlichen Koordinatensystem, bei ortsfester Bearbeitungseinheit bewegbar ist. Die Steuerung erfolgt so, dass ein lineares Verschieben des bevorzugt betrachteten Werkstückträgers in zwei oder in allen drei Richtungen gleichzeitig und schnell erfolgt. In der Praxis sind die Translationsachsen als Linearschienen ausgebildet.

Bei einer Bewegungseinheit für den Werkstückträger kann die Funktion Translationsachse in x-Richtung von der Rotationswelle des Werkstückträgers übernommen werden, indem diese drehmomentsicher verlänger- oder verkürzbar ausgebildet ist. Wahlweise kann die Rotationsachse auch als Ganzes in Axialrichtung verschiebbar sein.

Die erwähnte Rotationswelle des Werkstückträgers hat nach einer ersten Variante beidends stirnseitige Aufspannvorrichtungen, einerseits für einen zu bearbeitenden Rohling, andernends für ein zahntechnisches Präparationsmodell. Der Rohling besteht beispielsweise aus wenigstens einem der Metalloxidpul-ver AL₂O₃, TiO₂, MgO, Y₂O₃ oder einem Zirkonoxidmischkristall. Für nähere Angaben bezüglich des Rohlings und seiner Behandlung wird auf die WO,A1 99/47065 verwiesen. Das zahntechnische Präparationsmodell ist in der Regel ein Positivmodell, kann jedoch auch ein Negativmodell sein.

Nach einer anderen Variante hat die Rotationswelle nur an einer freien Stirnseite eine Aufspannvorrichtung für einen Rohling und ein zahntechnisches Präparationsmodell. Das andere Ende der Rotationswelle ist in der Bewegungseinheit verankert.

Falls der Rohling und das Präparationsmodell auf der selben Stirnseite der Rotationswelle einspannbar sind, müssen die Bearbeitungs- und die Digitalisierungseinheit der Werkzeugmaschine schnell und einfach auswechselbar sein. Dies kann beispielsweise mit einem Bajonettverschluss erfolgen, vorzugsweise sind jedoch Mittel zum Verschieben vorgesehen, z.B. eine Linearschiene oder eine Schwenkeinrichtung mit je einer Arretierung in Arbeitsposition.

Nach einer weiteren Variante kann die Werkzeugmaschine mehrere Bearbeitungseinheiten umfassen, zweckmässig sind zwei bezüglich der Rotationswelle gegenüberliegende Bearbeitungseinheiten vorgesehen, insbesondere oben-unten, vorn - hinten oder links - rechts, je nachdem die Rotationswelle wie üblich horizontal oder ausnahmsweise vertikal angeordnet ist.

Eine Bearbeitungseinheit einer Werkzeugmaschine umfasst je ein oder mehrere bevorzugt mehrere Bearbeitungswerkzeuge. Dabei sind diese Bearbeitungswerkzeuge, welche nicht gleich, sondern unterschiedlich für die Grob-und Feinbearbeitung ausgebildet sind, was sich auch in der Dimensionierung der Werkzeuge auswirkt. In der Regel sind zwei Bearbeitungswerkzeuge nach geometrischen Überlegungen angeordnet. Beispiele für Bearbeitungswerkzeuge im engeren Sinn sind Schleifstifte oder Fräser für die spanende Bearbeitung, oder strahlende Bearbeitungswerkzeuge für die Bearbeitung mittels Laser oder Elektroerrosion.

Da die Rohlinge insbesondere aus keramischem, beim Sintern schrumpfendem Material bestehen, ist die Eingabe von Skalierungsfaktoren von wesentlicher Bedeutung. Dies kann manuell über eine Tastatur, welche an der Rechen- und Steuereinheit angeschlossen ist, erfolgen, vorzugsweise jedoch über ein angeschlossenes Lesegerät zur optischen, elektrischen, magnetischen oder me-chanischen-taktilen Eingabe.

Konstruktiv ist es besonders vorteilhaft, für die Digitalisierungs- und Bearbeitungseinheit das gleiche mechanische, pneumatische, hydraulische oder elektromagnetische System auszubilden.

In bezug auf das Verfahren zur Herstellung von positiven Grundgerüsten für Zahnersatz mit der vorstehend beschriebenen automatischen Werkzeugmaschine wird die Aufgabe erfindungsgemäss dadurch gelöst, dass die Digitalisierung des Präparationsmodells und die Bearbeitung des Rohlings zeitlich entkoppelt auf der selben Werkzeugmaschine durchgeführt werden, wobei vor der Bearbeitung des Rohlings aus den ermittelten und gespeicherten Digitalisierungsdaten und einem vorgegebenen, materialspezifischen Skalierungsfaktor die Bearbeitungswege für den Rohling berechnet werden. Spezielle und weiterführende Ausführungsformen des Verfahrens ergeben sich aus den abhängigen Ansprüchen.

Der Skalierungsfaktor kann exakt 1 sein, in der Praxis liegt er jedoch meist zwischen 1 und 1,5, insbesondere zwischen 1,2 und 1,3. Er kann jedoch auch unterhalb von 1 liegen, dann wird das Präparationsmodell entsprechend verkleinert.

Vorzugsweise wird ein positives zahnärztliches Präparationsmodell digitalisiert. Es kann jedoch auch ein negatives Modell aufgespannt werden, wobei die digitalisierten Daten so umgerechnet werden, dass ein positiver bearbeiteter Rohling hergestellt wird.

Die kavitale und okklusale Digitalisierung und Umrechnung in Bearbeitungswege der Bearbeitungseinheit erfolgt vorzugsweise ohne Zusammenfügen in der elektronischen Steuereinheit, die Verwendung von CAD/CAM ist deshalb-wie bereits erwähnt - weder notwendig noch sinnvoll. Mit anderen Worten müs-sen sie nicht ausgehend von den digitalisierten Daten eine Flächenrückführung oder eine Rückführung der digitalisierten Oberflächen in CAD-Systeme durchführen. Eine Nachbearbeitung der Daten, z.B. das Einfügen von standardisierten Zwischengliedern aus einer Bibliothek über CAD erübrigt sich also. Die Arbeit an solchen Systemen würde spezielle Kenntnisse und Fertigkeiten erfordern und wäre durch die Verwendung von standardisierten Zwischengliedern hinsichtlich der Individualität für die Patentensituation eingeschränkt. Zum Digitalisieren der ganzen Oberfläche des Präparationsmodells wird vorerst in eine Grundeinstellung gebracht. Dann wird
- die Rotationswelle einmal um 180°, oder
- dreimal um 90°, oder
- fünfmal um 60° gedreht.

Selbstverständlich kann die Achse auch um andere, gleiche oder ungleiche Winkel gedreht werden, bis die gesamte Oberfläche des Präparationsmodells digitalisiert ist. Je nach Programm kann die Rotationswelle auch stufenweise hin und zurückgedreht werden.

Für die Herstellung des bearbeiteten Rohlings gilt entsprechendes, das Programm zum Drehen der Rotationswelle kann gleich oder unterschiedlich wie bei der Digitalisierung sein.

Die elektronische Steuereinheit kann auch die Bearbeitungswege für ein gespiegeltes Grundgerüst für Zahnersatz, Zahnkronen und/oder Zahnbrücken, berechnen und der Bearbeitungseinheit vorgeben.

Es hat sich als besonders vorteilhaft herausgestellt, das Verfahren mit fixierter Bearbeitungseinheit und dem Werkstückträger als einziger Bewegungseinheit in x-, y- und z-Richtung durchzuführen.

Die Erfindung wird dann anhand eines Ausführungsbeispiels einer automatischen Werkzeugmaschine, welche auch Gegenstand von abhängigen Ansprüchen ist, näher erläutert. Es zeigen schematisch:
- - Fig. 1: eine Werkzeugmaschine mit den Hauptkomponenten in perspektivischer Darstellung,
- - Fig. 2: eine Ansicht von vorn der Vorrichtung gemäss Fig. 1,
- - Fig. 3: eine Draufsicht auf die Vorrichtung gemäss Fig. 1, und
- - Fig. 4: einen Schnitt durch ein Grundgerüst einer Zahnbrücke.

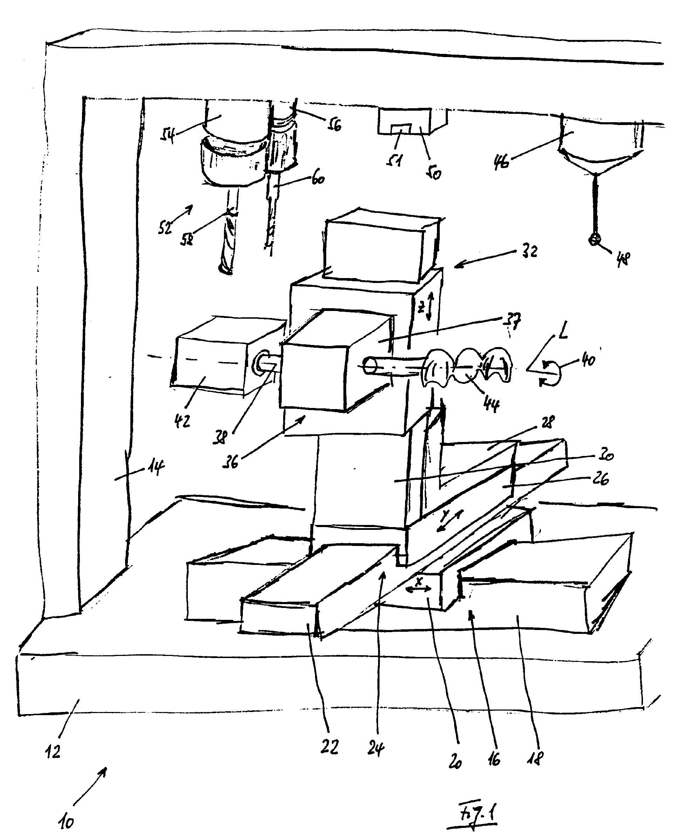

Eine Werkzeugmaschine 10gemäss Fig. 1 bis 3 umfasst als tragende Teile einen Maschinenrahmen, bestehend aus einer Grundplatte 12 und einem Portal 14.

Auf der Grundplatte 12 ist eine erste Linearverschiebung 16 in x-Richtung befestigt, beispielsweise durch Verschrauben einer Führungsschiene 18. Eine doppelt abgewinkelte Läuferschiene 20 kann entlang der Führungsschiene 18 in x-Richtung mit nicht dargestellten Mitteln verschoben und äusserst exakt positioniert werden, beispielsweise mechanisch, pneumatisch, hydraulisch oder elektromagnetisch.

Auf der Läuferschiene 20 ist in y-Richtung, welche senkrecht zur x-Richtung verläuft, eine Führungsschiene 22 einer zweiten Linearverschiebung 24 starr befestigt. Entlang der Führungsschiene 22 ist eine entsprechend beidseits abgewinkelte Läuferschiene 26 mit ebenfalls nicht dargestellten Mitteln zur exakten Positionierung aufgebracht.

Auf der Läuferschiene 26 ist ein Befestigungswinkel 28 zur stabilen Halterung einer weiteren Führungsschiene 30 einer dritten Linearverschiebung 32 in z-Richtung, senkrecht zur x- und y-Richtung, mit einer ebenfalls beidseitig abgewinkelten Läuferschiene 34, welche ebenfalls mit nicht dargestellten Mitteln in eine exakte Position verschiebbar ist.

Auf der Läuferschiene 34 ist eine Rotationseinheit 36 mit einer vorliegend horizontalen Rotationswelle 38 in einem Wellenlager 37. Diese ist durch Drehung im Uhrzeiger- oder Gegenuhrzeigersinn, durch einen Doppelpfeil 40 dargestellt, um eine Längsachse L in eine exakte Position drehbar. Einends ist ein quaderförmiger Rohling 42 aus sinterbarem Keramikmaterial aufgespannt, andernends das zahntechnische Präparationsmodell 44.

Schräg oberhalb des zahntechnischen Präparationsmodells 44 ist eine Digitalisierungseinheit 46 am Portal 14 des Maschinenrahmens befestigt. Diese umfasst einen im Bereich des Präparationsmodells 44 angeordneten Digitalisie-rungs-Taststift 48 aus einem zylindrischen Stift mit einer Kugel, welcher me-chanisch-taktil arbeitet, indem die Oberfläche des Präparationsmodells 44 abgetastet wird. Wahlweise kann die Digitalisierungseinheit 46 auch mittels einer Strahlungsquelle, z.B. für Laser, arbeiten.

Die aufgenommenen Daten werden in eine elektronische Rechen- und Steuereinheit 50 geleitet, dort gespeichert und die Bearbeitungswege für eine ortsfeste Bearbeitungseinheit 52 festgelegt. Über ein Lesegerät 51 können die charakteristischen Daten des Rohlings 42 in die elektronische Rechen- und Steuereinheit 50 eingegeben werden. In Kombination mit der Bewegungseinheit findet eine relative Bewegung dieser Einheit mit dem Rohling 42 in bezug auf die ortsfeste Bearbeitungseinheit 52 statt.

Die direkt oder über einen gemeinsamen Träger am Portal 14 befestigte Bearbeitungseinheit 52 umfasst je eine Spindel 54,56 für das Grobbearbeitungswerkzeug 58 und das Feinbearbeitungswerkzeug 60. Beide Spindeln 54, 56 haben im vorliegenden Fall je einen Fräser oder einen Schleifstift.

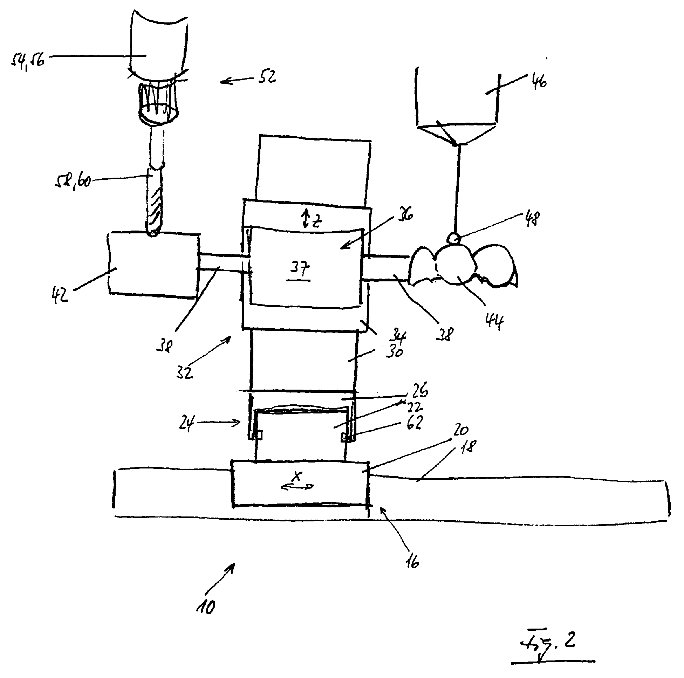

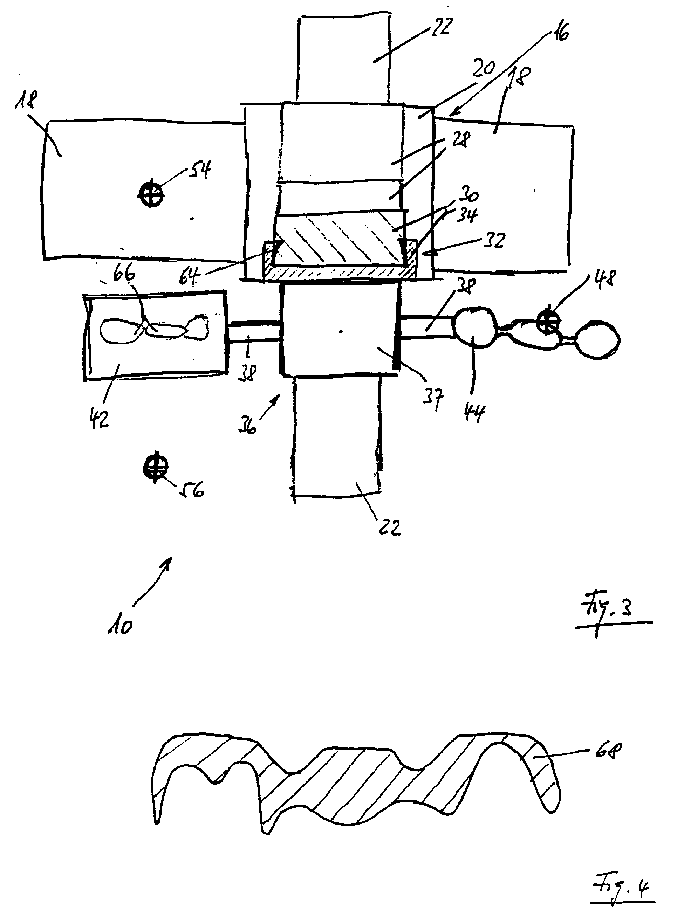

In den Fig. 2 und 3 ist der aus Grundplatte 12 und Portal 14 bestehende Maschinenrahmen aus Übersichtlichkeitsgründen weggelassen.

Die Stabilität der Läuferschienen 20, 26 und 34 wird beispielsweise durch eine Schwalbenschwanzform oder durch zwei seitliche Längsnuten 62 in den Seitenflächen der Führungsschienen 18, 22, 30 sichergestellt. In diese Längsnuten 62 greifen entsprechende Profilteile oder Nocken der Läuferschienen 20, 26, 34 ein (Fig. 2).

In Fig. 3 ist die Position des Grobbearbeitungswerkzeugs 58 und des Feinbearbeitungswerkzeugs 60 angedeutet, ebenso die Position des Taststiftes 48 oder der Strahlungsquelle. Weiter ist erkennbar, dass die eine Hälfte der vertikalen Führungsschiene 30 eine Schwalbenschwanzform 64 aufweist, die beiden abgewinkelten Schenkel der Läuferschiene 34 sind entsprechend ausgebildet.

Im quaderförmigen Rohling 42 ist der bearbeitete Rohling 66 angedeutet. Entgegen der in den meisten Fällen üblichen Praxis ist dieser kleiner angedeutet als das entsprechende Präparationsmodell 44, hätte also einen unter 1 liegenden Skalierungsfaktor. In der Praxis ist der bearbeitete Rohling 66 in den meisten Fällen grösser ausgebildet als das entsprechende Präparationsmodell 44, der Skalierungsfaktor liegt über 1, d.h. der bearbeitete Rohling 66 schrumpft beim Sintern auf das exakte Mass des Präparationsmodells 44.

Von erfindungswesentlicher Bedeutung sind die drei Translationsachsen, d.h. die Linearführungen 16, 24, 32 für die drei Raumrichtungen x, y, z, sie bilden zusammen mit der Rotationseinheit eine Bewegungseinheit, welche als Werkstückträger für den Rohling 42 dient. Wahlweise kann die Bearbeitungseinheit 52 die drei translatorische Bewegungseinheiten aufweisen. Dann wird nicht das Werkstück, der Rohling 42, zur Bearbeitungseinheit 52 geführt, sondern diese zum fix installierten Rohling 42.

An der Rechen- und Steuereinheit 50 sollen keine üblichen CAD-Tätigkeiten durchgeführt werden. Sie dient der Steuerung der gesamten Vorrichtung, d.h. der Steuerung der Bewegungen der Bewegungseinheit, der Datenaufnahme der Oberflächen durch die Digitalisierungseinheit 46, zum Ein- und Ausschalten der die Bearbeitungswerkzeuge 58, 60 halternden Spindeln 54, 56 und zur Skalierung der Oberflächendaten.

In Fig. 4 ist ein dichtgesinterter bearbeiteter Rohling 66 im Schnitt dargestellt, es handelt sich um ein Grundgerüst 68 für eine Zahnbrücke.

Die Werkzeugmaschine gemäss den Fig. 1 bis 3 arbeitet wie folgt.

Das positive Präparationsmodell 44 für das Grundgerüst 68 einer Zahnbrücke wird auf einer Stirnseite der Rotationswelle 38 befestigt. Auf der gegenüberliegenden Stirnseite wird der poröse, keramische Rohling 42 eingespannt. Mit der Digitalisierungseinheit 46 wird die vollständige Oberfläche des positiven Präparationsmodells 44 digital in die elektronische Rechen- und Steuereinheit 50 übernommen. Dazu wird zunächst die okklusale Oberfläche digitalisiert. Dann wird das Präparationsmodell 44 mittels der Rotationswelle 38 um einen bestimmten Winkel, vorliegend um 180°, gedreht. Anschliessend wird in gleicher Weise die kavitale Oberfläche des Präparationsmodells 44 erfasst. Ein Zusammenfügen der okklusalen und kavitalen Oberfläche des Präparationsmodells 44 in der Steuerungs- und Recheneinheit 50 ist nicht notwendig, weil die relative Position von okklusaler und kavitaler Oberfläche durch die Rotationswelle 38 festgelegt ist.

Durch die Eingabe eines Skalierungsfaktors von 1,2512 werden für die Digitaldaten der okklusalen und kavitalen Oberflächen vergrösserte Oberflächen abgeleitet und unter Berücksichtigung der geometrischen Daten des Grobbearbeitungswerkzeugs 58 und des Feinbearbeitungswerkzeugs 60 die Werk-zeugwege berechnet. Ergebnis sind Bearbeitungsprogramme in zweckmässig folgender Reihenfolge:
- Grobbearbeitung für die okklusale Oberfläche (1),
- Grobbearbeitung für die kavitale Oberfläche (2),
- Feinbearbeitung für die okklusale Oberfläche (3) und
- Feinbearbeitung für die kavitale Oberfläche (4)

Die Reihenfolge kann auch eine andere sein, z.B. (2), (1), (4), (3) oder (1), (3), (2), (4).

Die geometrische Anordnung der Bearbeitungswerkzeuge 58, 60 ergeben die notwendigen Verschiebungen in x-, y- und z-Richtung oder eine Spiegelung der Daten für die Bearbeitungen.

Anschliessend erfolgt die Bearbeitung des Rohling 42. Unter Berücksichtigung der Verschiebungen/Spiegelungen wird zunächst die Grobbearbeitung für die okklusale Oberfläche nach dem entsprechenden Bearbeitungsprogramm mit dem Grobbearbeitungswerkzeug 58 durchgeführt. Dann wird die Rotationswelle 38 um 180° gedreht und dann unter Berücksichtigung der Verschiebun-gen/Spiegelungen die Grobbearbeitung für die kavitale Oberfläche nach dem entsprechenden Bearbeitungsprogramm mit dem Grobbearbeitungswerkzeug 58 durchgeführt. Darauf wird unter Berücksichtigung der Verschiebungen/ Spiegelungen die Feinbearbeitung der kavitalen Oberfläche nach dem ent-sprechenden Bearbeitungsprogramm mit dem Feinbearbeitungswerkzeug 60 durchgeführt. Im Anschluss erfolgt eine Drehung der Rotationswelle 38 um 180°. Abschliessend wird unter Berücksichtigung der notwendigen Verschie-bungen/Spiegelungen die Feinbearbeitung für die okklusale Oberfläche nach dem entsprechenden Bearbeitungsprogramm mit dem Feinbearbeitungswerkzeug 60 durchgeführt. Ergebnis ist ein bearbeiteter Rohling 66, welcher um den Skalierungsfaktor 1.2512 vergrössert dem Positivmodell entspricht.

Unter Verwendung geeigneter Bearbeitungswerkzeuge kann es einerseits vorteilhaft sein, nur einen Bearbeitungsschritt pro Oberfläche (okklusale und kavitale) vorzunehmen, andererseits können statt zwei auch drei oder mehr Bearbeitungsschritte pro Oberfläche durchgeführt werden.

Der bearbeitete Rohling wird von der Drehwelle 38 entfernt. Die anschliessend folgenden Arbeitsschritte sind das Brennen (Sintern) des bearbeiteten noch porösen keramischen Rohlings zu seiner vollen Dichte und die Individualisie-rung durch Aufbrennen von Feldspatkeramik (vgl. beispielsweise die WO,A 99/47065).

Wie erwähnt können durch spezielle lineare Abbildungen der Daten auch gespiegelte und/oder sogar verzerrte Kopien des Präparationsmodells aus dem Rohling herausgearbeitet werden.

## Patentansprüche

1. Automatische Werkzeugmaschine (10) zur Herstellung von Grundgerüsten (68) für Zahnersatz, insbesondere für Zahnkronen und/oder Zahnbrücken, von genauer dreidimensionaler Gestalt, welche Grundgerüste (68) auf präparierten natürlichen und/oder künstlichen Zahnstümpfen befestigbar sind, wobei die Werkzeugmaschine (10) einen Maschinenrahmen (12, 14) oder ein -gehäuse, einen Werkstückträger mit einer Rotationswelle (38), wenigstens eine Digitalisierungseinheit (46), wenigstens eine Bearbeitungseinheit (52) und eine elektronische Rechen- und Steuereinheit (50) für alle Antriebsorgane umfasst,
dadurch gekennzeichnet, dass ein Träger für das Werkstück, einen Rohling (42), und/oder für die Bear-beitungseinheit/en (52) als Bewegungseinheit mit drei Translationsachsen in x-, y- und z-Richtung ausgebildet ist.

2. Werkzeugmaschine (10) nach Anspruch 1, dadurch gekennzeichnet, dass die Länge der Rotationswelle (38) drehmomentsicher veränderbar oder die Rotationsachse (38) als Ganzes in Axialrichtung (L) verschiebbar ist und eine Translationsachse, vorzugsweise in x-Richtung, bildet.

3. Werkzeugmaschine (10) nach Anspruch 1 oder 2, dadurch gekennzeichnet, dass die Rotationswelle (38) beidends stirnseitige Aufspannvorrich-tungen für einen Rohling (42) und ein zahntechnisches Präparationsmodell (44) aufweist.

4. Werkzeugmaschine (10) nach Anspruch 1 oder 2, dadurch gekennzeichnet, dass die Rotationswelle (38) an einer freien Stirnseite eine Vorrichtung zum alternierenden Aufspannen eines Rohlings (42) oder eines zahntechnischen Präparationsmodells (44) aufweist.

5. Werkzeugmaschine (10) nach Anspruch 4, dadurch gekennzeichnet, dass die Digitalisierungs- (46) und die Bearbeitungseinheit (52) auswechselbar sind, vorzugsweise durch Verschieben mit einer Schwenkeinrichtung oder einer Linearschiene.

6. Werkzeugmaschine (10) nach einem der Ansprüche 1 bis 5, dadurch gekennzeichnet, dass sie mehrere Digitalisierungs- (46) und/oder Bearbeitungseinheiten (52) umfasst, vorzugsweise zwei bezüglich der Rotationswelle (38) diagonal gegenüberliegende, insbesondere oben - unten, vorn-hinten, oder links - rechts.

7. Werkzeugmaschine (10) nach einem der Ansprüche 1 bis 6, dadurch gekennzeichnet, dass eine Bearbeitungseinheit (52) mehrere Bearbeitungswerkzeuge (58, 60) hat, welche geometrisch abgestimmt sind, vorzugsweise je eines für die Grob- und eines für die Feinbearbeitung.

8. Werkzeugmaschine (10) nach einem der Ansprüche 1 bis 7, dadurch gekennzeichnet, dass die Bearbeitungseinheit (52) mit spanenden oder strahlenden Bearbeitungswerkzeugen (58, 60) ausgestattet ist, insbesondere mit Schleifstiften, Fräsern oder Strahlungsquellen für Laser oder Elektroerrosion.

9. Werkzeugmaschine (10) nach einem der Ansprüche 1 bis 8, dadurch gekennzeichnet, dass die elektronische Rechen- und Steuereinheit (50) ein optisches, elektrisches, magnetisches oder mechanisch-taktiles Lesegerät (51) für die Eingabe von Skalierungsfaktoren aufweist.

10. Werkzeugmaschine (10) nach einem der Ansprüche 1 bis 9, dadurch gekennzeichnet, dass für die Digitalisierungs- (46) und die Bearbeitungseinheit (52) das gleiche mechanische, pneumatische, hydraulische oder elektromagnetische System ausgebildet ist.

11. Verfahren zur Herstellung von positiven Grundgerüsten (68) für Zahnersatz mit der automatischen Werkzeugmaschine (10) nach einem der Ansprüche 1 bis 10,
dadurch gekennzeichnet, dass die Digitalisierung des Präparationsmodells (44) und die Bearbeitung des Rohlings (41) zeitlich entkoppelt auf derselben Werkzeugmaschine (10) durchgeführt werden, wobei vor der Bearbeitung des Rohlings (42) aus den ermittelten und gespeicherten Digitalisierungsdaten und einem vorgegebenen, materialspezifischen Skalierungsfaktor die Bearbeitungswege für den Rohling (42) berechnet werden.

12. Verfahren nach Anspruch 11, dadurch gekennzeichnet, dass die charakteristischen Rohlingsdaten in die elektronische Rechen- und Steuereinheit (50) eingegeben sowie das zahntechnische Präparationsmodell (44) des Grundgerüstes (68) und bei entsprechender Gestaltung der Rotationswelle (38) der Rohling (42) aufgespannt werden, wenigstens die kavitalen Innenoberflächen des Präparationsmodells (44) vollständig digitalisiert werden, die digital aufgenommenen Oberflächendaten in Bearbeitungswege für die Bearbeitungseinheit (52) umgerechnet werden, der Rohling (42) in konsekutiven Schritten bis zum Erreichen der gespeicherten Endform bearbeitet wird, und der bearbeitete Rohling (66) und das Präparationsmodell (44) von der Werkzeugmaschine (10) genommen werden.

13. Verfahren nach Anspruch 11 oder 12, dadurch gekennzeichnet, dass ein positives Präparationsmodell (44) digitalisiert wird.

14. Verfahren nach einem der Ansprüche 11 bis 13, dadurch gekennzeichnet, dass die okklusale und kavitale Digitalisierung und Umrechnung in Bearbeitungswege ohne Zusammenfügen in der elektronischen Rechen- und Steuereinheit (50) erfolgt.

15. Verfahren nach einem der Ansprüche 11 bis 14, dadurch gekennzeichnet, dass die Rotationswelle (38) zum Digitalisieren der ganzen Oberfläche des Präparationsmodells (44) und/oder zur Herstellung des bearbeiteten Rohlings (66) aus der Grundeinstellung jeweils um 180°, um 90° oder um 60° gedreht wird.

16. Verfahren nach einem der Ansprüche 11 bis 15, dadurch gekennzeichnet, dass die elektronische Rechen- und Steuereinheit (50) die Bearbeitungswege für ein gespiegeltes Grundgerüst (68) für Zahnersatz berechnet und der Bearbeitungseinheit (52) vorgibt.

17. Verfahren nach einem der Ansprüche 11 bis 16, dadurch gekennzeichnet, dass vorerst die Grobbearbeitung der okklusalen, anschliessend der kavitalen Oberfläche des bearbeiteten Rohlings (66), dann dessen Feinbearbeitung der okklusalen, anschliessend der kavitalen Oberfläche erfolgt, wobei auch mit bezüglich der Rotationswelle (38) diagonal gegenüberliegen-dem groben und feinen Bearbeitungswerkzeug (58, 60) gearbeitet wird.

18. Verfahren nach einem der Ansprüche 11 bis 17, dadurch gekennzeichnet, dass mit fixierter Bearbeitungseinheit (52) und dem Träger des Werkstücks, des Rohlings (42), als einziger Bewegungseinheit gearbeitet wird.
